Europäisches Patentamt

European Patent Office

Office européen des brevets

(11) Veröffentlichungsnummer: **0 232 766 B1**

# EUROPÄISCHE PATENTSCHRIFT

(45) Veröffentlichungstag der Patentschrift: **30.10.91**

(21) Anmeldenummer: **87100866.0**

(22) Anmeldetag: **22.01.87**

(51) Int. Cl.⁵: **C01B 25/234**, C22B 3/00, C01B 17/90, C22B 30/00, C22B 13/08

(54) Verfahren zum Entfernen von Schwermetallen aus Mineralsäuren.

(30) Priorität: **13.02.86 DE 3604483**

(43) Veröffentlichungstag der Anmeldung:
**19.08.87 Patentblatt 87/34**

(45) Bekanntmachung des Hinweises auf die Patenterteilung:
**30.10.91 Patentblatt 91/44**

(84) Benannte Vertragsstaaten:
**AT BE DE ES FR GB NL SE**

(56) Entgegenhaltungen:
**EP-A- 0 023 195**
**DE-A- 2 422 902**
**DE-B- 2 109 970**

(73) Patentinhaber: **HOECHST AKTIENGESELL-SCHAFT**
**Postfach 80 03 20**
**W-6230 Frankfurt am Main 80(DE)**

(72) Erfinder: **Schrödter, Klaus, Dr.**
**Baadenberger Strasse 18**
**W-5000 Köln 30(DE)**

**Beschreibung**

Die vorliegende Erfindung betrifft ein Verfahren zum Entfernen von Schwermetallen, insbesondere von Kupfer, Arsen, Antimon und Blei, aus Mineralsäuren durch Ausfällung ihrer Sulfide.

Es ist bekannt, Schwermetalle wie Arsen, Kupfer und Blei durch Zusatz von Natriumsulfid-Lösung aus Phosphorsäuren als schwerlösliche Verbindungen auszufällen. Dabei erfolgt die Abtrennung der Niederschläge über Druck- oder Vakuumfilter (vergl. "Ullmanns Encyklopädie der technischen Chemie", 4. Auflage, 1979, Band 18, Seiten 312, 321 und 322; WINNACKER-KÜCHLER: "Chemische Technologie", Band 2, Anorganische Technologie I, 4. Auflage, 1982, Seite 219).

Nach der DE-C-21 09 970 wird Arsen aus Polyphosphorsäure dadurch entfernt, daß die Säure kontinuierlich über Kopf in eine Begasungskolonne eingeführt wird, während von unten her im Gegenstrom Schwefelwasserstoffgas eingeleitet und im Kreislauf geführt wird.

Gemäß der EP-B1-23 195 werden Arsen und Kupfer dadurch aus nach dem Naßverfahren hergestellter Phosphorsäure entfernt, daß nahe dem Boden eines mit der Säure gefüllten Rührbehälters Natriumsulfid-Lösung eindosiert wird, wonach man die Säure eine längere Zeit, beispielsweise 2 Stunden, im Behälter verweilen läßt, bevor man die Säure von den ausgefällten Sulfiden durch Filtration abtrennt.

Schließlich ist aus der DE-A-24 22 902 ein Verfahren zur Herstellung von Cadmiumsulfid aus konzentrierter Naßverfahrensphosphorsäure bekannt, nach welchem die Naßverfahrensphosphorsäure bei Temperaturen zwischen 0 und 100°C sowie Drucken zwischen 2 und 51 bar bis zu 6 Stunden mit Schwefelwasserstoff oder Verbindungen, die bei der Umsetzung mit Phosphorsäure Schwefelwasserstoff entwickeln, beispielsweise $Na_2S$, unter ständiger Durchmischung behandelt wird. Das dabei ausgefallene Cadmiumsulfid wird ohne Temperaturerhöhung und ohne längere Wartezeiten insbesondere durch Druckfiltration von der Phosphorsäure abgetrennt.

Nachteilig ist bei den bekannten Verfahren, daß sie einen großen apparativen und sicherheitstechnischen Aufwand erfordern. Einerseits müssen nämlich wegen der für eine quantitative Fällung der Schwermetallsulfide notwendigen langen Verweilzeit große oder mehrere Begasungskolonnen bzw. Rührbehälter installiert sein und andererseits muß ein großer Überschuß an Schwefelwasserstoff aufgewendet werden, weil wegen ungenügender Dispersion des Schwefelwasserstoffes in der Mineralsäure in den Kolonnen bzw. durch die Rührer der Behälter Teile des Schwefelwasserstoffes ungenutzt aus der Säure entweichen, wobei der ungenutzte Schwefelwasserstoff in aufwendiger Weise in die Begasungskolonnen bzw. Rührbehälter zurückgeführt werden muß.

Es ist daher Aufgabe der vorliegenden Erfindung, ein Verfahren zum Entfernen von Schwermetallen aus Mineralsäuren anzugeben, bei welchem die Fällung der Schwermetallsulfide mit geringem technischem Aufwand und großer Wirksamkeit möglich ist. Erfindungsgemäß bringt man eine Mischung der Mineralsäure und 0,05 bis 5 Gewichts% Filterhilfsmittel in die Saugleitung einer hochtourigen Kreiselpumpe ein, führt als Fällmittel 150 bis 500 Mol% Schwefelwasserstoff oder einer Alkalisulfidlösung, bezogen auf die zur Fällung der in der Mineralsäure enthaltenen Schwermetalle als Sulfide stöchiometrisch erforderliche Menge, in die Saugleitung unmittelbar vor der Pumpe ein, bewirkt die Fällung unter Anwendung eines Druckes von 1,5 bis 10 bar sowie unter intensiver Durchmischung und trennt anschließend die Schwermetallsulfide und das Filterhilfsmittel mit Hilfe eines Druckfilters von der Mineralsäure unter Beibehaltung des gewählten Druckes ab.

Das Verfahren gemäß der Erfindung kann weiterhin wahlweise auch noch dadurch ausgestaltet sein, daß

a) als Mineralsäure Phosphorsäure eingesetzt ist;

b) Naßverfahrensphosphorsäure eingesetzt ist;

c) als Mineralsäure Schwefelsäure eingesetzt ist;

d) man der Mineralsäure das Filterhilfsmittel in einer Menge von 0,1 bis 0,5 Gewichts% zumischt;

e) als Filterhilfsmittel Kieselgur verwendet ist;

f) man der Mineralsäure Schwefelwasserstoff oder Alkalisulfid in einer Menge von 200 bis 300 Mol%, bezogen auf die zur Fällung der Schwermetalle als Sulfide stöchiometrisch erforderlichen Menge, hinzufügt.

Beim erfindungsgemäßen Verfahren ist überraschend, daß trotz extrem kurzer Reaktionszeit zwischen Mineralsäure und Schwefelwasserstoff die Sulfide von Arsen, Antimon, Kupfer und Blei quantitativ aus der Mineralsäure ausgefällt werden.

Die beim Verfahren gemäß der Erfindung verwendete hochtourige Kreiselpumpe bewirkt eine gute Vermischung von Mineralsäure und Fällmittel.

Beim erfindungsgemäßen Verfahren muß während der Förderung der Mineralsäuren mit den ausgefällten Schwermetallsulfiden zum Filter ein Druck von 1,5 bis 10 bar, vorteilhafterweise von 2 bis 6 bar,

2

aufrechterhalten werden, weil anderenfalls die Schwermetallsulfide teilweise Zersetzung erleiden.

Das Verfahren gemäß der Erfindung kann auch zur Entfernung von Kupfer, Arsen, Antimon und Blei aus Salzsäure angewendet werden.

Beim erfindungsgemäßen Verfahren kann die Temperatur für die Fällung bzw. die Filtration der Schwermetallsulfide in Abhängigkeit von der Konzentration der Mineralsäure eingestellt werden. So sind bei Phosphorsäure mit einer Konzentration von etwa 30 Gew% $P_2O_5$ Temperaturen von 30 bis 70 °C, mit etwa 60 Gew% $P_2O_5$ 60 bis 90 °C und mit etwa 85 Gew% $P_2O_5$ 100 bis 140 °C vorteilhaft.

Das erfindungsgemäße Verfahren wird anhand der folgenden Beispiele näher erläutert, wobei die Abreicherung der Schwermetalle aus der angefügten Tabelle hervorgeht.

Beispiel 1

In einem Rührbehälter befand sich Phosphorsäure, welche durch Aufschluß von Rohphosphat mit Schwefelsäure nach dem Dihydrat-Verfahren erhalten worden war und welche eine Temperatur von 50 °C aufwies. In die Phosphorsäure wurden 0,1 Gew% Kieselgur als Filterhilfsmittel suspendiert. Die mit Kieselgur versetzte Phosphorsäure wurde von einer Kreiselpumpe (1500 Upm) angesaugt. In die Phosphorsäure wurde im Ansaugstutzen der Kreiselpumpe eine 15 gew%ige Natriumsulfid-Lösung eindosiert, wobei die Natriumsulfid-Menge 300 Mol%, bezogen auf die zur Fällung von Kupfer und Arsensulfid stöchiometrisch erforderliche Menge, betrug. Das Druckrohr der Kreiselpumpe war mit einer Filterpresse verbunden, mit deren Hilfe die ausgefällten Schwermetallsulfide bei einem Druck von 2 bis 6 bar von der Phosphorsäure abfiltriert wurden. Die Filtrationsleistung betrug 0,6 m³/m² Filterfläche • Stunde.

Beispiel 2

Beispiel 1 wurde mit der Änderung wiederholt, daß die Phosphorsäure vorher durch Eindampfen aufkonzentriert worden war und eine Temperatur von 70 °C aufwies.

Beispiel 3

Beispiel 1 wurde mit der Änderung wiederholt, daß eine durch Verbrennen von gelbem Phosphor erhaltene Phosphorsäure eingesetzt wurde, welche eine Temperatur von 75 °C aufwies.

Beispiel 4

Beispiel 1 wurde mit der Änderung wiederholt, daß eine Polyphorpshorsäure eingesetzt wurde, welche durch Verbrennen von gelbem Phosphor erhalten worden war und welche eine Temperatur von 110 °C aufwies. Zur Abtrennung der ausgefällten Schwermetallsulfide von der Polyphosphorsäure wurde eine Drucknutsche mit Edelstahlgewebe verwendet, wobei der Druck bei der Filtration 6 bar betrug.

Beispiel 5

Im Rührbehälter gemäß Beispiel 1 befand sich eine Mangansulfat-Lösung, welche 5 Gew% freie Schwefelsäure enthielt und eine Temperatur von 30 °C aufwies. In der schwefelsauren Mangansulfat-Lösung wurden 0,1 Gew% Kieselgur suspendiert. Weiter wurde wie in Beispiel 1 beschrieben verfahren.

Wie aus der beigefügten Tabelle hervorgeht, wurde in allen Beispielen der Gehalt an den genannten Schwermetallen auf weniger als 1 ppm abgesenkt.

Beispiel 6

Beispiel 1 wurde mit der Änderung wiederholt, daß die eindosierte Natriumsulfid-Menge 200 Mol%, bezogen auf die zur Fällung von Kupfer- und Arsensulfid stöchiometrisch erforderliche Menge, betrug. Im Filtrat wurden 0,3 ppm Kupfer und 0,5 ppm Arsen ermittelt.

Beispiel 7

Beispiel 1 wurde mit der Änderung wiederholt, daß die eindosierte Natriumsulfid-Menge 150 Mol%, bezogen auf die zur Fällung von Kupfer- und Arsensulfid stöchiometrisch erforderliche Menge, betrug. Im Filtrat wurden 1,2 ppm Kupfer und 1,9 ppm Arsen ermittelt.

Beispiel 8

Beispiel 1 wurde mit der Änderung wiederholt, daß in die Phosphorsäure 1,5 Gewichts% Kieselgur suspendiert wurden. Die Filtrationsleistung betrug 0,7 m$^3$/m$^2$ Filterfläche • Stunde.

Beispiel 9

Beispiel 1 wurde mit der Änderung wiederholt, daß in die Phosphorsäure 0,08 Gewichts% Kieselgur suspendiert wurden. Die Filtrationsleitung betrug 0,2 m$^3$/m$^2$ Filterfläche • Stunde.

**T A B E L L E**

Abtrennung von Schwermetallsulfiden aus Mineralsäuren

| Bei-spiel | Mineralsäure | | °C | Arsen (ppm) | | Antimon (ppm) | | Blei (ppm) | | Kupfer (ppm) | |
|---|---|---|---|---|---|---|---|---|---|---|---|
| | Art | Konzentration | | vorher | nachher | vorher | nachher | vorher | nachher | vorher | nachher |
| 1 | Naßphosphorsäure | 30 % $P_2O_5$ | 50 | 8 | < 0,05 | 1 | < 0,05 | 1 | < 0,01 | 19 | < 0,05 |
| 2 | | 50 % $P_2O_5$ | 70 | 17 | < 0,1 | 1,5 | < 0,05 | 1 | < 0,01 | 68 | < 0,05 |
| 3 | Phorphorsäure, thermisch | 60 % $P_2O_5$ | 75 | 25 | < 0,1 | | | | | | |
| 4 | Polyphosphorsäure, thermisch | 85 % $P_2O_5$ | 110 | 19 | < 0,5 | | | | | | |
| 5 | schwefelsaure $MnSO_4$-Lösung (7 gew%ig) | 5 % freie $H_2SO_4$ | 30 | 1 | < 0,01 | 0,1 | < 0,01 | | | | |

## Patentansprüche

1. Verfahren zum Entfernen von Schwermetallen, insbesondere von Kupfer, Arsen, Antimon und Blei, aus Mineralsäuren durch Ausfällung ihrer Sulfide, wobei man eine Mischung der Mineralsäure und 0,05 bis 5 Gewichts% Filterhilfsmittel in die Saugleitung einer hochtourigen Kreiselpumpe einbringt, und wobei man als Fällmittel 150 bis 500 Mol% Schwefelwasserstoff oder einer Alkalisulfidlösung, bezogen auf die zur Fällung der in der Mineralsäure enthaltenen Schwermetalle als Sulfide stöchiometrisch erforderliche Menge, in die Saugleitung unmittelbar vor der Pumpe einführt, und wobei man die Fällung unter Anwendung eines Druckes von 1,5 bis 10 bar sowie unter intensiver Durchmischung bewirkt, und wobei man anschließend die Schwermetallsulfide und das Filterhilfsmittel mit Hilfe eines Druckfilters von der Mineralsäure unter Beibehaltung des gewählten Druckes abtrennt.

2. Verfahren nach Anspruch 1, dadurch gekennzeichnet, daß als Mineralsäure Phosphorsäure eingesetzt ist.

3. Verfahren nach Anspruch 2, dadurch gekennzeichnet, daß Naßverfahrensphosphorsäure eingesetzt ist.

4. Verfahren nach Anspruch 1, dadurch gekennzeichnet, daß als Mineralsäure Schwefelsäure eingesetzt ist.

5. Verfahren nach mindestens einem der Ansprüche 1 bis 4, dadurch gekennzeichnet, daß man der Mineralsäure das Filterhilfsmittel in einer Menge von 0,1 bis 0,5 Gewichts% zumischt.

6. Verfahren nach mindestens einem der Ansprüche 1 bis 5, dadurch gekennzeichnet, daß als Filterhilfsmittel Kieselgur verwendet ist.

7. Verfahren nach mindestens einem der Ansprüche 1 bis 6, dadurch gekennzeichnet, daß man der Mineralsäure Schwefelwasserstoff oder Alkalisulfid in einer Menge von 200 bis 300 Mol%, bezogen auf die zur Fällung der Schwermetalle als Sulfide stöchiometrisch erforderliche Menge, hinzufügt.

## Claims

1. A process for the removal of heavy metals, in particular copper, arsenic, antimony and lead, from mineral acids by precipitation of their sulfides, where a mixture of the mineral acid and from 0.05 to 5% by weight of a filtration aid are introduced into the suction line of a high-speed rotary pump, and where, as precipitants, from 150 to 500 mol% of hydrogen sulfide or of an alkali metal sulfide solution, based on the amount stoichiometrically necessary for precipitation of the heavy metals present in the mineral acid as sulfides, are introduced into the suction line immediately before the pump, and where the precipitation is effected using a pressure of from 1.5 to 10 bar and with vigorous mixing, and where the heavy metal sulfides and the filtration aid are subsequently separated from the mineral acid using a pressure filter while maintaining the selected pressure.

2. The process as claimed in claim 1, wherein the mineral acid employed is phosphoric acid.

3. The process as claimed in claim 2, wherein wet-process phosphoric acid is employed.

4. The process as claimed in claim 1, wherein the mineral acid employed is sulfuric acid.

5. The process as claimed in at least one of claims 1 to 4, wherein the mineral acid is admixed with from 0.1 to 0.5% by weight of the filtration aid.

6. The process as claimed in at least one of claims 1 to 5, wherein the filtration aid used is kieselguhr.

7. The process as claimed in at least one of claims 1 to 6, wherein hydrogen sulfide or alkali metal sulfide is added to the mineral acid in an amount of from 200 to 300 mol%, based on the amount stoichiometrically necessary for precipitation of the heavy metals as sulfides.

## Revendications

1. Procédé pour éliminer les métaux lourds, en particulier le cuivre, l'arsenic, l'antimoine et le plomb, contenus dans des acides minéraux par précipitation de leurs sulfures, dans lequel on envoie un mélange de l'acide minéral et de 0,05 à 5% en poids de produit auxiliaire de filtration dans le conduit d'aspiration d'une pompe centrifuge tournant à grande vitesse, on envoie dans le conduit d'aspiration immédiatement avant la pompe, en tant qu'agent précipitant, du sulfure d'hydrogène ou une solution de sulfure alcalin en quantite de 150 à 500 moles% par rapport à la quantité théorique nécessaire pour précipiter à l'état de sulfures les métaux lourds contenus dans l'acide minéral, on précipite sous application d'une pression de 1,5 à 10 bar et sous mélange intensif et on sépare ensuite les sulfures de métaux lourds et le produit auxiliaire de filtration de l'acide minéral à l'aide d'un filtre sous pression en maintenant la pression choisie.

2. Procédé selon la revendication 1, caractérisé en ce que l'acide minéral mis en oeuvre est de l'acide phosphorique.

3. Procédé selon la revendication 2, caractérisé en ce que l'acide mis en oeuvre est de l'acide phosphorique par voie humide.

4. Procédé selon la revendication 1, caractérisé en ce que l'acide minéral mis en oeuvre est de l'acide sulfurique.

5. Procédé selon au moins une des revendications 1 à 4, caractérisé en ce que l'on ajoute le produit auxiliaire de filtration à l'acide minéral en quantité de 0,1 à 0,5% en poids.

6. Procédé selon au moins une des revendications 1 à 5, caractérisé en ce que l'on utilise en tant que produit auxiliaire de filtration du kieselguhr.

7. Procédé selon au moins une des revendications 1 à 6, caractérisé en ce que l'on ajoute à l'acide minéral du sulfure d'hydrogène ou un sulfure alcalin en quantité de 200 à 300 moles% par rapport à la quantité théorique nécessaire pour précipiter les métaux lourds à l'état de sulfures.